# EUROPÄISCHE PATENTSCHRIFT

(11) **EP 1 386 066 B1**
(45) Veröffentlichungstag und Bekanntmachung des Hinweises auf die Patenterteilung: **07.01.2009**
(21) Anmeldenummer: 02742949.7
(22) Anmeldetag: 06.05.2002
(51) Int. Cl.: F01N 3/28, B01J 35/04, B23K 35/34

(54) **WABENKÖRPER UND VERFAHREN ZU SEINER HERSTELLUNG**
HONEYCOMB BODY AND METHOD FOR PRODUCTION THEREOF
CORPS EN NID D'ABEILLES ET PROCEDE DE FABRICATION DUDIT CORPS

(30) Priorität: 07.05.2001 DE 10122082
(43) Veröffentlichungstag der Anmeldung: 04.02.2004
(73) Patentinhaber: Emitec Gesellschaft für Emissionstechnologie mbH, 53797 Lohmar (DE)
(72) Erfinder: ALTHÖFER, Kait, 51674 Wiehl (DE); HODGSON, Jan, 53842 Troisdorf (DE); VOIT, Michael, 51375 Leverkusen (DE); KURTH, Ferdi, 53894 Mechernich (DE)
(74) Vertreter: Kahlhöfer, Hermann
(86) Internationale Anmeldenummer: PCT/EP2002/004947
(87) Internationale Veröffentlichungsnummer: WO 2002/090734

(56) Entgegenhaltungen:
- EP-A- 0 136 515
- EP-A- 0 434 539
- WO-A-01/94761
- US-A- 5 431 330
- US-A- 5 506 028
- US-A- 6 036 926

## Beschreibung

Die vorliegende Erfindung bezieht sich auf eine Blechfolie für einen metallischen Wabenkörper aus Blechlagen, wobei eine Mehrzahl von derartigen Blechfolien zur Bildung des Wabenkörpers mit einem pulverförmigen Lot verbunden werden. Weiterhin bezieht sich die Erfindung auf einen Wabenkörper, insbesondere als Katalysator-Trägerkörper in einer Abgasanlage einer Verbrennungskraftmaschine, der zumindest teilweise strukturierte Blechlagen umfasst, die so gewickelt und/oder gestapelt sind, dass diese für ein Fluid durchströmbare Kanäle bilden, wobei die Blechlagen zumindest teilweise mittels eines pulverförmigen Lots miteinander verbunden sind. Die Erfindung betrifft außerdem ein Verfahren zur Herstellung eines Wabenkörpers.

Der Einsatz von metallischen Wabenkörpern, welche eine Mehrzahl von Blechfolien aufweisen, die zur Bildung der Wabenstruktur gewickelt und/oder gestapelt sind, ist insbesondere als Katalysator-Trägerkörper in Abgasanlagen von Otto- oder Dieselmotoren im Automobilbau bekannt. Die Blechfolien werden dabei miteinander unter Verwendung eines Lotmaterials fügetechnisch verbunden, um die strukturelle Integrität des Wabenkörpers auch bei den in einem Abgassystem auftretenden thermischen und dynamischen Belastungen sicherzustellen. Als Lotmaterial kommt neben drahtförmigem oder bandförmigem Lotmaterial auch pulverförmiges Lot zum Einsatz, wie z.B. in EP 0 316 515.

Um eine dauerhaft Funktionalität des Wabenkörpers zu gewährleisten, muss eine Fixierung des metallischen Wabenkörpers im Abgassystem so gestaltet sein, dass gegebenenfalls unterschiedliche thermische Ausdehnungen der Komponenten des Wabenkörpers ermöglicht werden. Dies ist insbesondere in Hinblick auf eine Verbindung der Blechfolien mit einem den Wabenkörper umgebenden Mantelrohr von besonderer Bedeutung. Dazu ist es beispielsweise bekannt, den Wabenkörper in nur einem axialen Teilbereich mit dem Mantelrohr zu verbinden, der vorzugsweise in einem Bereich von 20 mm ausgehend von der Abgaseintrittsseite angeordnet ist. So wird in den Teilbereichen, in denen der Wabenkörper nicht mit dem Mantelrohr verbunden ist, eine Relativbewegung der sich schnell aufheizenden beziehungsweise schnell abkühlenden Blechfolien gegenüber dem Mantelrohr gewährleistet und das Auftreten von thermischen Spannungen verhindert. Dabei ist es von besonderer Bedeutung, dass bei der Fertigung die gewünschten Grenzen hinsichtlich des Verbindungsbereiches exakt eingehalten werden können. Dies stellt im Hinblick auf die Verwendung von drahtförmigem oder bandförmigem Lotmaterial, das einen gewissen Zusammenhalt des Lotmaterials sicherstellt, keine großen Probleme dar.

Betrachtet man jedoch den Fertigungsprozess hinsichtlich der Verwendung von pulverförmigem Lotmaterial, konnte bislang kein eng begrenzter und definierter Verwendungsbereich mit ausreichender Prozesssicherheit gerade für eine Serien- oder Massenfertigung sichergestellt werden. Dies hat insbesondere seinen Ursprung darin, dass vor dem Wickeln und/oder Stapeln der Blechfolien in dem Verbindungsbereich ein Haftmittel aufgetragen wird, das zur Fixierung des pulverförmigen Lots dient. Insbesondere während des Wickelvorgangs der Blechfolien kommt es dabei zu lokalen Verschmierungen des Haftmittel und/oder zu Wickel- beziehungsweise Stapelfehlern aufgrund der deutlich erhöhten Reibung durch das Haftmittel. Dies hat zur Folge, dass Lot in Bereichen des Wabenkörpers haften bleibt, wo dies unerwünscht ist, insbesondere auch außerhalb des zuvor definierten Verbindungsbereiches.

Hiervon ausgehend ist es Aufgabe der vorliegenden Erfindung, eine Blechfolie für einen metallischen Wabenkörper aus Blechlagen anzugeben, die zur Herstellung eines Wabenkörpers mit einem definierten Verbindungsbereich geeignet ist, wobei die oben erwähnten fertigungstechnischen Probleme beseitigt sind. Weiterhin sollen ein Wabenkörper und ein Verfahren zu seiner Herstellung angegeben werden, wobei die Prozesssicherheit in Hinblick auf die Ausbildung von fügetechnischen Verbindungen in einem vorgebbaren Verbindungsbereich der Blechfolien des Wabenkörpers miteinander deutlich erhöht wird.

Diese Aufgaben werden gelöst durch einen Wabenkörper gemäß den Merkmalen des Anspruchs 1 und ein Verfahren gemäß den Merkmalen des Anspruchs 10 Weitere vorteilhafte Ausgestaltungen sind in den jeweils abhängigen Ansprüchen beschrieben.

Die erfindungsgemäße Blechfolie zeichnet sich dadurch aus, dass sie mehrere Gleitstrukturen zum Aufeinandergleiten benachbart angeordneter Blechlagen aufweist. Diese Blechfolie wird insbesondere zur Herstellung eines Wabenkörpers eingesetzt, wobei eine Mehrzahl von derartigen Blechfolien mit einem pulverförmigen Lot verbunden werden. In Hinblick auf die vorgenommene Unterscheidung von Blechfolie und Blechlage sei angemerkt, dass Blechlagen Blechfolien mit und/oder ohne Gleitstrukturen umfassen und somit eine Art Oberbegriff bilden.

Die Gleitstrukturen sind beispielsweise als schienen- und/oder noppenförmige Erhebungen auf der Blechfolie ausgeführt, wobei ein vorgebbarer Abstand der benachbarten Blechlagen zueinander sichergestellt ist. Da die benachbarten Blechfolien sich im wesentlichen nur über die Gleitstrukturen berühren wird verhindert, dass die Blechlagen großflächig aufeinander gleiten. Das führt dazu, dass die auftretenden Reibkräfte während des Wickel- und/oder Stapelvorgangs deutlich reduziert werden, insbesondere hinsichtlich bereits mit Haftmittel versehenen Blechfolien. Das hat zum Beispiel zur Folge, dass betreffend des Wickel- beziehungsweise Stapelvorgangs der Blechfolien die zur Bildung eines Wabenkörpers erforderlichen Kräfte reduziert werden können. Zusätzlich wird somit ein Verschmieren des bereits aufgetragenen Haftmittels unterbunden.

Zudem begrenzen die mehreren Gleitstrukturen einen Verbindungsbereich zum Anbinden mindestens einer benachbarten Blechlage. Die Gleitstrukturen haben eine Strukturhöhe von höchstens 0,07 mm, insbesondere sogar eine Strukturhöhe kleiner 0,05 mm. Durch die Begrenzung des Verbindungsbereiches durch die Gleitstrukturen wird eine Art Haftmittel- und/oder Lotreservoir gebildet, wobei eine Ausbildung von fügetechnischen Verbindungen über den gewünschten Verbindungsbereich hinaus verhindert wird. Die exakte Strukturhöhe ist dabei auch unter Berücksichtigung des zu verwendenden Lotmaterials auszuwählen, insbesondere dessen mittleren Korndurchmessers. Weiterhin muss bedacht werden, dass eine deutliche strukturelle Versteifung der Blechfolie verhindert wird, die beispielsweise einen nachfolgenden Wickelvorgang behindern könnte.

Gemäß einer weiteren Ausgestaltung der Blechfolie sind die Gleitstrukturen nahe einer Stirnseite angeordnet, vorzugsweise innerhalb eines Abstandes von 10 mm, insbesondere 5 mm von der Stirnseite. In Hinblick darauf, dass die Stirnseiten der Blechfolien letztendlich eine Stirnfläche des Wabenkörpers bilden, erlaubt eine entsprechende Ausführung der Gleitstrukturen die fügetechnische Verbindung der Blechfolien miteinander nahe einer Gaseintrittsseite, für den Fall, dass der gebildete Wabenkörper im Abgassystem einer Verbrennungskraftmaschine eingesetzt wird. Auf dieser Gaseintrittsseite treten üblicherweise die höchsten thermischen Belastungen auf, so dass an dieser Stelle eine definierte fügetechnische Verbindung von besonderer Bedeutung ist.

Dabei ist es vorteilhaft, dass die Gleitstrukturen sich über eine Breite der Blechfolie durchgängig erstrecken, vorzugsweise etwa parallel zu der Stirnseite. Auf diese Weise lässt sich gegebenenfalls eine lückenlose Begrenzung des Verbindungsbereiches in einem scheibenförmigen Bereich des Wabenkörpers nahe der Gaseintrittsseite erzeugen. Dabei wirken die Gleitstrukturen in dieser "Scheibe" auch etwas versteifend, so dass selbst Blechfolien mit einer Dicke kleiner 0,08 mm beziehungsweise sogar kleiner als 0,05 mm, insbesondere kleiner als 0,03 mm, auch in Abgasreinigungsanlagen mit hoher dynamischer Beanspruchung einsetzbar sind.

Gemäß einer noch weiteren vorteilhaften Ausgestaltung sind die Gleitstrukturen noppenartig ausgebildet. Eine noppenartige Ausbildung der Gleitstrukturen meint, dass diese sich nicht durchgängig über eine Breite der Blechfolie erstrecken. Die Ausbildung einer noppenartigen Gleitstruktur ist insbesondere vorteilhaft in Bezug auf den durch die Ausbildung der Gleitstruktur erzielten Druckverlust. Dieser fällt bei noppenartigen Gleitstrukturen im Vergleich zu sich über eine Breite der Blechfolie erstreckenden Gleitstrukturen geringer aus.

Gemäß noch einer weiteren Ausgestaltung weisen die Gleitstrukturen eine Gleitfläche auf, die bezogen auf ein Abgleiten der benachbarten Blechlage aus dem gleichen Material eine Gleitreibungszahl aufweist, die kleiner 0,15 ist, insbesondere kleiner 0,1. Dabei ist es besonders vorteilhaft, dass zumindest die Gleitflächen mit einem Gleitmittel versehen ist. Die Ausführungsform der Gleitflächen mit einer derartig niedrigen Gleitreibungszahl beziehungsweise einem entsprechenden Gleitmittel gewährleistet einen störungsfreien Wickelvorgang beziehungsweise ein unbehindertes Aufeinandergleiten benachbarter Blechlagen.

Zudem wird ein Wabenkörper, insbesondere als Katalysator-Trägerkörper in einer Abgasanlage einer Verbrennungskraftmaschine vorgeschlagen, der zumindest teilweise strukturierte Blechlagen umfasst, die so gewickelt und/oder gestapelt sind, dass diese für ein Fluid durchströmbare Kanäle bilden. Wegen der Herstellung der fügetechnische Verbindung der Blechlagen miteinander unter Verwendung eines pulverförmigen Lots, weisen die Blechlagen wenigstens eine Blechfolie mit mehreren Gleitstrukturen auf. Dabei ist es besonders vorteilhaft, dass die Gleitstrukturen von zueinander benachbart angeordneten Blechfolien in etwa gleicher axialer Entfernung von einer Stirnfläche des Wabenkörpers angeordnet sind. Dies führt insbesondere zu einem scharf begrenzten, zur Stirnfläche des Wabenkörpers parallelen und scheibenförmigen Ausgestaltung des Verbindungsbereiches. Das hat zur Folge, dass das thermische Expansions- beziehungsweise Kontraktionsverhalten des Wabenkörpers infolge einer thermischen Wechselbeanspruchung exakt vorherbestimmbar ist, und die fügetechnische Verbindung so ausgeführt werden kann, dass eine strukturelle Unversehrtheit des Wabenkörpers über einen langen Zeitraum hin gewährleistet ist.

Gemäß einer weiteren Ausgestaltung sind die Gleitstrukturen jeweils zweier direkt benachbarter Blechfolien zueinander hin ausgerichtet. Das hat zur Folge, dass die Gleitstrukturen der zwei benachbarten Folien direkt aufeinander angeordnet sind und zumindest teilweise eine Art Reservoir zur Fixierung des pulverförmigen Lotmaterials bilden. Dies hat auch den Vorteil, dass die Strukturhöhe der Gleitstrukturen reduziert werden kann, da sich die Strukturhöhen benachbarter Blechfolien letztendlich addieren. Dabei ist es gegebenenfalls auch vorteilhaft, dass die Blechfolien jeweils bidirektionale Gleitstrukturen beziehungsweise sich in unterschiedliche Richtungen hin erstreckende Gleitstrukturen aufweisen. Dies hat zur Folge, dass die vorteilhaften Gleitreibungseigenschaften der Blechfolie zu allen benachbarten Blechfolien gewährleistet sind und beidseitig Lot- beziehungsweise Haftmittelreservoire gebildet werden.

Das erfindungsgemäße Verfahren zur Herstellung eines Wabenkörpers umfasst folgende Schritte:
- Herstellen von glatten und strukturierten Blechlagen und/oder von Blechfolien, welche wenigstens eine Blechfolie mit mehreren Gleitstrukturen aufweisen, die einen Verbindungsbereich zum Anbinden mindestens einer benachbarten Blechlage und/oder Blechfolie begrenzen;
- Auftragen eines Haftmittels in dem von den Gleitstrukturen begrenzten Verbindungsbereich;
- Stapeln und/oder Wickeln der Blechlagen und/oder Blechfolien zur Bildung eines Wabenkörpers;
- Beloten des Wabenkörpers mit einem pulverförmigen Lot, wobei das Lot mit dem Haftmittel in dem Verbindungsbereich fixiert wird; und
- Erhitzen des Wabenkörpers zur Generierung von Lötverbindungen der Blechlagen (und/oder Blechfolien) miteinander.

Bei einer bevorzugten Ausführungsform des Wabenkörpers sind alle glatten und strukturierten Blechlagen als Blechfolien mit Gleitstrukturen ausgeführt. Somit werden die zum Stapeln und/oder Wickeln der Blechlagen benötigten Kräfte reduziert. Auch ein Verschmieren des Haftmittels wird so unterbunden, wobei ein scharf begrenzter Verbindungsbereich gebildet wird. Demnach können auch mit einem pulverförmigen Lot Verbindungsbereiche erzielt werden, die hinsichtlich ihrer Abgegrenztheit gegenüber restlichen Bereichen des Wabenkörpers ebenso präzise ausgeführt sind wie beispielsweise unter Verwendung von drahtförmigem oder bandförmigem Lotmaterial.

Die Erfindung wird nun anhand der in den Zeichnungen dargestellten, besonders bevorzugten Ausführungsformen ausführlich erläutert. Es zeigen:
- Fig. 1: Eine Draufsicht auf einen metallischen Wabenkörper,
- Fig. 2: eine perspektivische und schematische Darstellung einer weiteren Ausführungsform eines metallischen Wabenkörpers,
- Fig. 3: perspektivisch und schematisch eine Darstellung einer Blechfolie mit Gleitstrukturen,
- Fig. 4: eine Detailansicht benachbarter Blechfolien mit Gleitstrukturen,
- Fig. 5: perspektivisch und schematisch ein weiteres Ausführungsbeispiel einer Blechfolie mit noppenartigen Gleitstrukturen,
- Fig. 6: einen Schnitt entlang der Linie VI-VI in Figur 5, und
- Fig. 7: einen Schnitt entlang der Linie VII-VII in Figur 5.

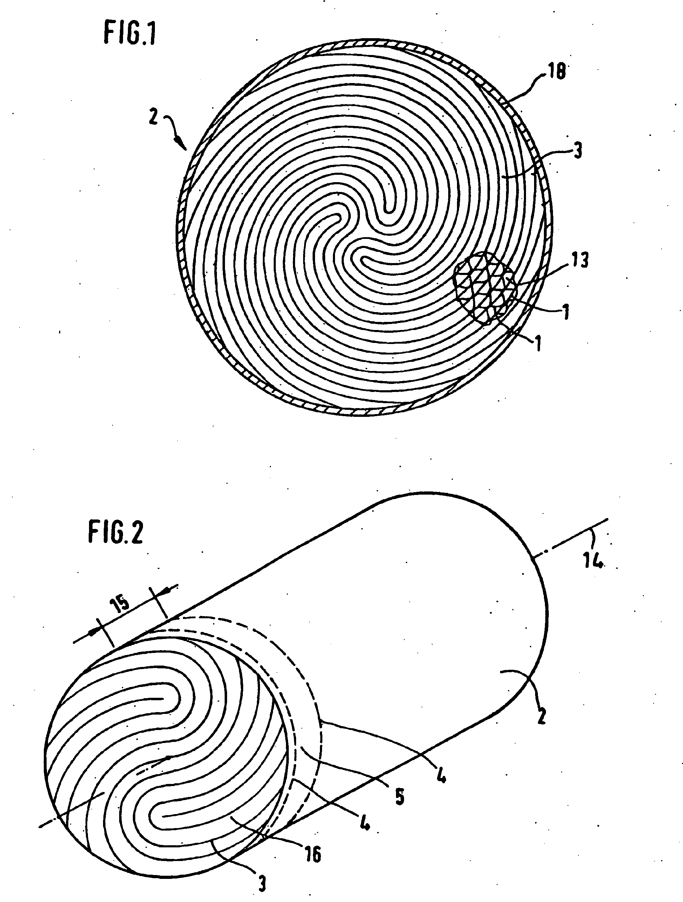

Figur 1 zeigt schematisch eine Ansicht eines metallischen Wabenkörpers 2, der zumindest teilweise strukturierte Blechlagen 3 aufweist, die so gewickelt und/oder gestapelt sind, dass diese für ein Fluid durchströmbare Kanäle 13 bilden. Die Blechlagen 3 umfassen gewellte und glatte Blechfolien 1, die von einem Mantelrohr 18 umgeben sind. Ein derartiger Wabenkörper 2 dient insbesondere als Katalysator-Trägerkörper in einer Abgasanlage einer Verbrennungskraftmaschine im Automobilbau.

Figur 2 zeigt schematisch und perspektivisch eine weitere Ausführungsform eines Wabenkörpers 2, umfassend zumindest teilweise strukturierte Blechlagen 3. Zur Herstellung des dargestellten Wabenkörpers 2 werden zunächst glatte und strukturierte Blechlagen 3 sowie Blechfolien 1 mit mindestens einer Gleitstruktur 4 gefertigt, die einen Verbindungsbereich 5 zum Anbinden mindestens einer benachbarten Blechlage 3 bzw. Blechfolie 1 begrenzen. Anschließend wird ein Haftmittel 17 (nicht dargestellt) in dem von der Gleitstruktur 4 begrenzten Verbindungsbereich 5 aufgetragen. Die Blechlagen 3 und Blechfolien 1 werden nun zur Bildung eines Wabenkörpers 2 gestapelt und gewickelt. Im Zuge des Belotens des Wabenkörpers 2 mit einem pulverförmigen Lot 19 (nicht dargestellt) wird das Lot 19 mit dem Haftmittel 17 in dem Verbindungsbereich 5 fixiert, wobei aufgrund eines anschließenden Erhitzens des Wabenkörpers 2 Lötverbindungen der Blechlagen 3 und Blechfolien 1 miteinander generiert werden.

Bei der dargestellten Ausführungsform des Wabenkörpers 2 sind die Gleitstrukturen 4 zueinander benachbart angeordneter Blechfolien 1 in gleicher Entfernung 15 von einer Stirnseite 16 des Wabenkörpers 2 angeordnet, wobei die Entfernung 15 in Richtung einer Achse 14 definiert ist. Im Hinblick auf den Einsatz eines derartigen Wabenkörpers 2 in einer Abgasreinigungsanlage einer Verbrennungskraftmaschine erfolgt der Eintritt des zu reinigenden Abgases vorzugsweise über die Stirnseite 16, in deren Nähe sich der scheibenförmig ausgebildete Verbindungsbereich 5 befindet Somit werden die größtmöglichen thermischen und dynamischen Beanspruchungen des Wabenkörpers 2 in diesem Bereich besonders gut kompensiert, wobei der stromabwärts angeordnete Teilbereich des Wabenkörpers 2 sich infolge thermischer Wechselbeanspruchung im wesentlichen frei ausdehnen beziehungsweise zusammenziehen kann.

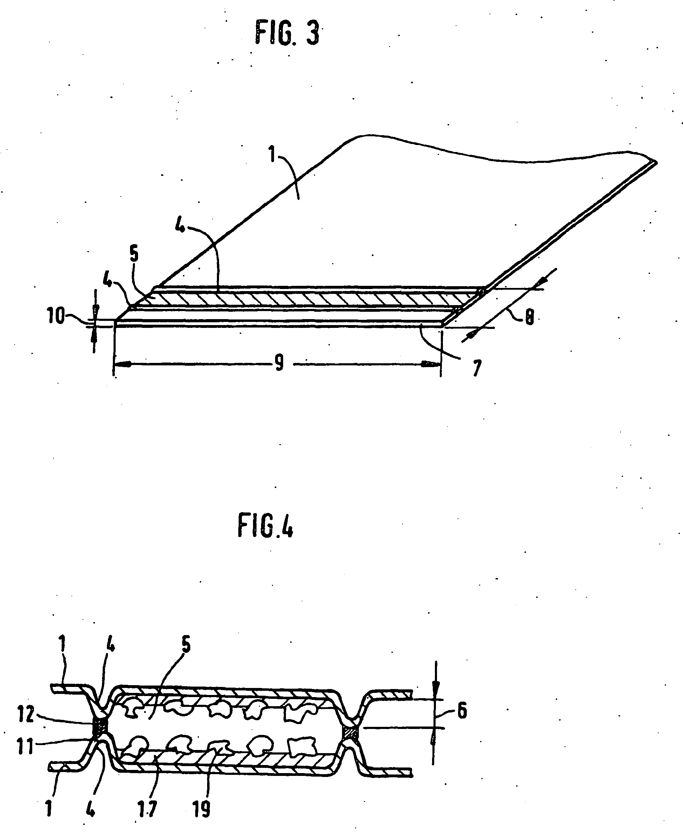

Figur 3 zeigt schematisch und perspektivisch eine Blechfolie 1 mit zwei Gleitstrukturen 4 zum Aufeinandergleiten benachbart angeordneter Blechlagen 3. Die Blechfolie 1 ist so gestaltet, dass die Gleitstrukturen 4 einen Verbindungsbereich 5 zum Anbinden der benachbarten Blechlage 3 begrenzen. Die Gleitstrukturen 4 sind dabei nahe einer Stirnseite 7 angeordnet, vorzugsweise innerhalb eines Abstandes15 von 5 bis 10 mm ausgehend von der Stirnseite 7. Die Gleitstrukturen 4 erstrecken sich dabei durchgängig über eine Breite 9 der Blechfolie 1 und sind etwa parallel zu der Stirnseite 7 angeordnet.

Die Dicke 10 der Blechfolie 1 ist vorzugsweise kleiner als 0,05 mm ausgeführt. Eine Mehrzahl derartiger Blechfolien 1 sind nach einem sich anschließenden Stapel- beziehungsweise Wickelvorgang vorzugsweise spiralig, s-formig oder evolventenförmig zu einem Wabenkörper 2 zusammengefasst.

Figur 4 zeigt schematisch und in einer Detailansicht zwei benachbart zueinander angeordnete Blechfolien 1. Die Blechfolien 1 weisen jeweils 2 Gleitstrukturen 4 mit einer Gleitfläche 11 auf, wobei die Gleitstrukturen 4 jeweils zueinander hin ausgerichtet sind. Das hat zur Folge, dass die Gleitstrukturen 4 der oben dargestellten Blechfolie 1 auf den Gleitflächen 11 der unten dargestellten Blechfolie 1 angeordnet sind. Zur Reduzierung der Reibungskräfte während des Aufeinanderabgleitens der benachbarten Blechfolien 1 sind die Gleitflächen 11 mit einem Gleitmittel 12 versehen.

Die Gleitstrukturen 4 weisen eine Strukturhöhe 6 von höchstens 0,07 mm auf. Bei der dargestellten Ausführungsform von Gleitstrukturen 4 ist beispielsweise eine Ausgestaltung der Gleitstrukturen 4 mit einer Strukturhöhe 6 von kleiner 0,03 mm möglich, da sich die Strukturhöhen 6 benachbarter Blechfolien 1 in dieser Ausgestaltung addieren.

Die Gleitstrukturen 4 begrenzen einen Verbindungsbereich 5. In diesem Verbindungsbereich 5 sind die Blechfolien 1 mit einer Haftschicht 17 versehen, auf der das nachträglich zugeführte pulverförmige Lot 19 haftet. Die Strukturhöhe 6 ist dabei so zu wählen, dass ein Abstreifen des Haftmittels 17 beziehungsweise der Lotkörner 19 verhindert wird. Auf diese Weise können sehr scharf begrenzte Verbindungsbereiche 5 erzielt werden.

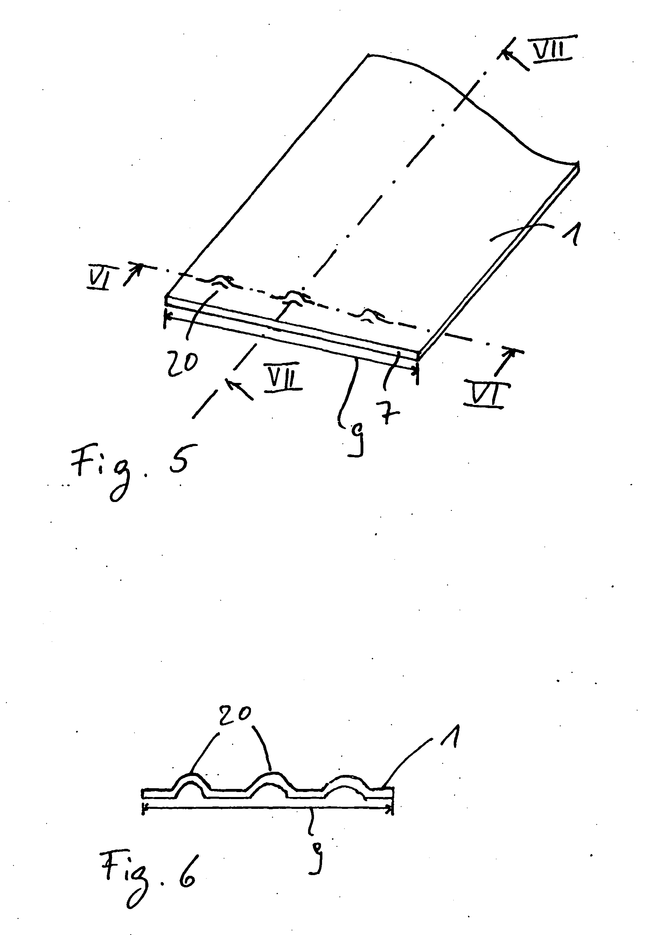

Figur 5 zeigt schematisch und perspektivisch ein weiteres Ausführungsbeispiel einer Blechfolie 1. Benachbart zur Stirnseite 7 sind noppenartige Strukturen 20 parallel zur Stirnseite 7 als Gleitstrukturen ausgebildet, auf denen benachbart angeordnete Blechlagen gleiten können.

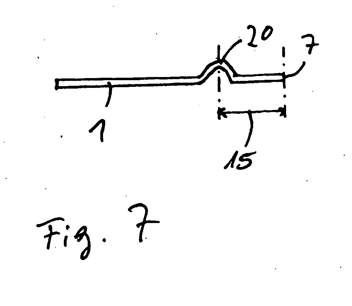

Figur 6 zeigt einen Schnitt durch eine Blechfolie 1 entlang der Linie VI-VI in Figur 5, die noppenartigen Strukturen 20 sind nicht durchgehend über die Breite 9 der Blechfolie 1 ausgebildet. Figur 7 zeigt einen weiteren Schnitt durch eine Blechfolie 1 entlang der Linie VII-VII in Figur 5. Die noppenartigen Strukturen 20 sind in einer Entfernung 15 von der Stirnseite 7 der Blechfolie 1 ausgebildet.

### Bezugszeichenliste

- 1: Blechfolie
- 2: Wabenkörper
- 3: Blechlage
- 4: Gleitstruktur
- 5: Verbindungsbereich
- 6: Strukturhöhe
- 7: Stirnseite
- 8: Abstand
- 9: Breite
- 10: Dicke
- 11: Gleitfläche
- 12: Gleitmittel
- 13: Kanal
- 14: Achse
- 15: Entfernung
- 16: Stirnfläche
- 17: Haftmittel
- 18: Mantelrohr
- 19: Lot
- 20: noppenartige Struktur

## Patentansprüche

1. Wabenkörper (2), insbesondere als Katalysator-Trägerkörper in einer Abgasanlage einer Verbrennungskraftmaschine, umfassend zumindest teilweise strukturierte Blechlagen (3), die so gewickelt und/oder gestapelt sind, dass diese für ein Fluid durchströmbare Kanäle (13) bilden, wobei die Blechlagen (3) zumindest teilweise mittels eines pulverförmigen Lots (19) in einem Verbindungsbereich (5) miteinander verbunden sind, **dadurch gekennzeichnet, dass** die Blechlagen (3) wenigstens eine Blechfolie (1) mit mehreren Gleitstrukturen (4) zum Aufeinandergleiten benachbart angeordneter Blechlagen (3) aufweist, wobei die Gleitstrukturen eine Strukturhöhe (6) von höchstens 0,07 mm haben und einen, von einer Stirnseite (7) der Blechfolie (1) entfernt angeordneten Verbindungsbereich (5) zum Anbinden mindestens einer benachbarten Blechlage (3) begrenzen, so dass über den Verbindungsbereich (5) hinaus keine fügetechnischen Verbindungen mittels Lot (19) vorgesehen sind.

2. Wabenkörper (2) nach Anspruch 1, **dadurch gekennzeichnet, dass** die Gleitstrukturen (4) der Blechfolie (1) mit einer Strukturhöhe (6) kleiner 0,05 mm ausgeführt sind.

3. Wabenkörper (2) nach Anspruch 1 oder 2, **dadurch gekennzeichnet, dass** die Gleitstrukturen (4) der Blechfolie (1) nahe einer Stirnseite (7) angeordnet sind, vorzugsweise innerhalb eines Abstandes (8) von 10 mm, insbesondere 5 mm, von der Stirnseite (7).

4. Wabenkörper (2) nach einem der Ansprüche 1 bis 3, **dadurch gekennzeichnet, dass** die Gleitstrukturen (4) sich über eine Breite (9) der Blechfolie (1) durchgängig erstrecken, vorzugsweise etwa parallel zu der Stirnseite (7).

5. Wabenkörper (2) nach einem der Ansprüche 1 bis 3, **dadurch gekennzeichnet, dass** die Gleitstrukturen (4) der Blechfolie (1) noppenartig ausgebildet sind.

6. Wabenkörper (2) nach einem der Ansprüche 1 bis 5, **dadurch gekennzeichnet, dass** die Blechfolie (1) eine Dicke (10) aufweist, die höchstens 0,08 mm beträgt und vorzugsweise sogar kleiner als 0,05 mm ist.

7. Wabenkörper (2) nach einem der Ansprüche 1 bis 6, **dadurch gekennzeichnet, dass** die Gleitstrukturen (4) der Blechfolie (1) eine Gleitfläche (11) aufweisen, wobei die Gleitfläche (4) bezogen auf ein Abgleiten der benachbarten Blechlage (3) aus dem gleichen Material eine Gleitreibungszahl aufweist, die kleiner 0,15 ist, insbesondere kleiner 0,1, und/oder zumindest die Gleitfläche (11) mit Gleitmittel (12) versehen ist.

8. Wabenkörper (2) nach einem der Ansprüche 1 bis 7, **dadurch gekennzeichnet, dass** Gleitstrukturen (4) zueinander benachbart angeordneter Blechfolien (1) in gleicher axialer (14) Entfernung (15) von einer Stirnfläche (16) des Wabenkörpers (2) angeordnet sind.

9. Wabenkörper (2) nach einem der Ansprüche 1 bis 8, **dadurch gekennzeichnet, dass** die Gleitstrukturen (4) jeweils zweier direkt benachbarter Blechfolien (1) zueinander hin ausgerichtet sind.

10. Verfahren zur Herstellung eines Wabenkörpers (2) nach einem der Ansprüche 1 bis 9, umfassend folgende Schritte:
- Herstellen von glatten und strukturierten Blechlagen (3), wobei wenigstens eine Blechfolie (1) umfasst ist, wobei die wenigstens eine Blechfolie (1) mehrere Gleitstrukturen (4) mit einer Strukturhöhe (6) von höchstens 0,07 mm aufweist, die einen Verbindungsbereich (5) zum Anbinden mindestens einer benachbarten Blechlage (3) und/oder Blechfolie (1) begrenzen,
- Auftragen eines Haftmittels (17) in dem von den Gleitstrukturen (4) der Blechfolie (1) begrenzten Verbindungsbereich (5),
- Stapeln und/oder Wickeln der Blechlagen (3) zur Bildung eines Wabenkörpers (2),
- Beloten des Wabenkörpers (2) mit einem pulverförmigen Lot (19), wobei das Lot (19) mit dem Haftmittel (17) in dem Verbindungsbereich (5) fixiert wird, und
- Erhitzen des Wabenkörpers (2) zur Generierung von Lötverbindungen der Blechlagen (3) miteinander.

## Claims

1. A honeycomb body (2), in particular as a catalyst support body in an exhaust system of an internal combustion engine, comprising at least partially structured sheet-metal layers (3), which are wound and/or stacked in such a way that they form passages (13) through which a fluid can flow, the sheet-metal layers (3) being at least partially joined to one another in a joining area (5) by means of a brazing material (19) in powder form, **characterized in that** the sheet-metal layers (3) have at least one sheet-metal foil (1) with several sliding structures (4) for sliding of adjacent sheet-metal layers (3) over one another, wherein the sliding structure (4) having a structure height (6) of at most 0.07 mm and delimiting a joining area (5) for attaching at least one adjacent sheet-metal layer (3), which is arranged with a distance to an end side (7) of the sheet-metal foil (1), so that no joined connections by means of brazing material (19) are provided beyond the joining area (5).

2. The honeycomb body (2) as claimed in claim 1, **characterized in that** the sliding structures (4) of the sheet-metal foil (1) have a structure height (6) of less than 0.05 mm.

3. The honeycomb body (2) as claimed in claim 1 or 2, **characterized in that** the sliding structures (4) of the sheet-metal foil (1) are arranged close to the end side (7), preferably at a distance (8) of 10 mm, in particular 5 mm, from the end side (7).

4. The honeycomb body (2) as claimed in one of claims 1 to 3, **characterized in that** sliding structures (4) extend continuously over a width (9) of the sheet-metal foil (1), preferably approximately parallel to the end side (7).

5. The honeycomb body (2) as claimed in one of claims 1 to 3, **characterized in that** the sliding structures (4) of the sheet-metal foil (1) are designed in the form of studs.

6. The honeycomb body (2) as claimed in one of claims 1 to 5, **characterized in that** the sheet-metal foil (1) has a thickness (10) of at most 0.08 mm and preferably even less than 0.05 mm.

7. The honeycomb body (2) as claimed in one of claims 1 to 6, **characterized in that** the sliding structures (4) of the sheet-metal foil (1) have a sliding surface (11) which, with respect to sliding against the adjacent sheet-metal layer (3) made from the same material, has a coefficient of sliding friction which is less than 0.15, in particular less than 0.1 and/or at least the sliding surface (11) is provided with lubricant (2).

8. The honeycomb body (2) as claimed in one of the claims 1 to 7, **characterized in that** sliding structures (4) of sheet-metal foils (1) arranged adjacent to one another are arranged at the same axial (14) distance (15) from an end face (16) of the honeycomb body (2).

9. The honeycomb body (2) as claimed in one of the claims 1 to 8, **characterized in that** the sliding structures (4) of in each case two directly adjacent sheet-metal foils (1) are oriented so as to face one another.

10. A process for producing a honeycomb body (2) according to one of claims 1 to 9, comprising the following steps:
- production of smooth and structured sheet-metal layers (3) whereby at least one sheet-metal foil (1) is comprised, the at least one sheet-metal foil (1) comprising several sliding structures (4) with a structure height (6) of at most 0.07 mm and delimiting a joining area (5) for attaching at least one adjacent sheet-metal layer (3) and/or sheet-metal foil (1),
- application of an adhesive (17) in the joining area (5) which is delimited by the sliding structures (4) of the sheet-metal foil (1),
- stacking and/or winding of the sheet-metal layers (3) to form a honeycomb body (2),
- brazing of the honeycomb body (2) using brazing material (19) in powder form, the brazing material (19) being fixed in the joining area (5) by the adhesive (17), and
- heating of the honeycomb body (2) in order to produce brazed joints between the sheet-metal layers (3).

## Revendications

1. Corps en nids d'abeilles (2), notamment comme corps support de catalyseur dans une installation de gaz d'échappement d'une machine à combustion interne, comprenant des couches de tôles au moins partiellement structurées (3) qui sont enroulées et/ou empilées de manière telle qu'elles forment des canaux (13) à travers lesquels un fluide peut s'écouler, les couches de tôles (3) étant reliées les unes aux autres au moins partiellement au moyen d'un matériau de brasage en forme de poudre (19) dans une région de liaison (5), **caractérisé en ce que** les couches de tôles (3) ont au moins une feuille de tôle (1) avec plusieurs structures de glissement (4) pour le glissement les unes sur les autres de couches de tôles (3) agencées de manière adjacente, les structures de glissement ayant une hauteur de structure (6) d'au maximum 0,07 mm et limitant une région de liaison (5) agencée à distance d'une face frontale (7) de la feuille de tôle (1), pour le rattachement d'au moins une couche de tôle adjacente (3), de sorte que des liaisons par technique de jointoiement au moyen de matériau de brasage (19) ne sont pas prévues au-delà de la région de liaison (5).

2. Corps en nids d'abeilles (2) selon la revendication 1, **caractérisé en ce que** les structures de glissement (4) de la feuille de tôle (1) sont réalisées avec une hauteur de structure (6) plus petite que 0,05 mm.

3. Corps en nids d'abeilles (2) selon la revendication 1 ou 2, **caractérisé en ce que** les structures de glissement (4) de la feuille de tôle (1) sont agencées à proximité d'une face frontale (7), de préférence à l'intérieur d'une distance (8) de 10 mm, notamment de 5 mm de la face frontale (7).

4. Corps en nids d'abeilles (2) selon l'une des revendications 1 à 3, **caractérisé en ce que** les structures de glissement (4) s'étendent de manière constante sur une largeur (9) de la feuille de tôle (1), de préférence environ parallèlement par rapport à la face frontale (7).

5. Corps en nids d'abeilles (2) selon l'une des revendications 1 à 3, **caractérisé en ce que** les structures de glissement (4) de la feuille de tôle (1) sont réalisées comme des nopes.

6. Corps en nids d'abeilles (2) selon l'une des revendications 1 à 5, **caractérisé en ce que** la feuille de tôle a une épaisseur (10) qui comporte au maximum 0,08 mm et de préférence même moins que 0,05 mm.

7. Corps en nids d'abeilles (2) selon l'une des revendications 1 à 6, **caractérisé en ce que** les structures de glissement (4) de la feuille de tôle (1) disposent d'une surface de glissement (11), la surface de glissement (4) ayant, en fonction d'un dérapage de la couche de tôle adjacente (3) du même matériau, un coefficient de frottement de glissement qui est plus petit que 0,15, notamment plus petit que 0,1, et/ou au moins la surface de glissement (11) est pourvue de lubrifiant.

8. Corps en nids d'abeilles (2) selon l'une des revendications 1 à 7, **caractérisé en ce que** les structures de glissement (4) de feuilles de tôles (1) agencées de manière adjacente les unes par rapport aux autres, sont agencées à même distance (15) axiale (14) d'une face frontale (16) du corps en nids d'abeilles (2).

9. Corps en nids d'abeilles (2) selon l'une des revendications 1 à 8, **caractérisé en ce que** les structures de glissement (4) de respectivement deux feuilles de tôles (1) directement adjacentes sont alignées l'une vers l'autre.

10. Procédé destiné à la fabrication d'un corps en nids d'abeilles (2) selon l'une des revendications 1 à 9, comprenant les étapes suivantes :
- fabrication de couches de tôles lisses et structurées (3), comprenant au moins une feuille de tôle (1), l'au moins une feuille de tôle (1) ayant une pluralité de structures de glissement (4) avec une hauteur de structure (6) d'au maximum 0,07 mm, qui limitent une région de liaison (5) pour rattacher au moins une couche de tôle adjacente (3) et/ou une feuille de tôle (1),
- application d'un lubrifiant (17) dans la région de liaison (5) limitée par les structures de glissement (4) de la feuille de tôle (1),
- empilage et/ou enroulement des couches de tôles (3) pour former un corps en nids d'abeilles (2),
- garnir de brasure le corps en nids d'abeilles (2) avec un matériau de brasure en forme de poudre (19), le matériau de brasure (19) étant fixé avec le lubrifiant (17) dans la région de liaison (5), et
- chauffer le corps en nids d'abeilles (2) pour générer des liaisons de brasage des couches de tôles (3) entre elles.
